# FASCICULE DE BREVET EUROPEEN

(11) **EP 1 138 434 B1**
(45) Date de publication et mention de la délivrance du brevet: **31.05.2006**
(21) Numéro de dépôt: 01400728.0
(22) Date de dépôt: 21.03.2001
(51) Int. Cl.: B23Q 5/00

(54) **Dispositif de motorisation électrique pour pince d'outillage**
Elektrisch betriebene Vorrichtung für einen Greifer
Electrically-powered equipment for a gripper

(30) Priorité: 31.03.2000 FR 0004122
(43) Date de publication de la demande: 04.10.2001
(73) Titulaire: ARO, F-72500 Château-du-Loir (FR)
(72) Inventeur: Tiberghien, Olivier Tanguy, 37360 Semblancay (FR); Plot, Hervé Jean, 72000 Le Mans (FR)
(74) Mandataire: Bérogin, Francis

(56) Documents cités:
- EP-A- 0 924 038
- DE-A- 19 749 681
- US-A- 3 802 713

## Description

La présente invention concerne un dispositif de motorisation électrique pour pince d'outillage, du type comportant un carter de moteur électrique dont l'arbre est connecté à la pince, pour la commande de l'ouverture d'outils portés par des bras articulés, de leur fermeture et de leur serrage sur une pièce, par un système de transformation, du type traversant le moteur, d'un mouvement rotatif de l'arbre en un mouvement de translation d'un organe d'actionnement de la pince, ce moteur étant associé à un organe d'asservissement accouplé au rotor du moteur, eux-mêmes raccordés à un variateur de commander (voir par example DE-A-197 49 681).

Il pourra s'agir par exemple d'une pince de soudage par résistance, les outils précités étant alors constitués par des électrodes de soudage par points. Il pourrait cependant s'agir aussi de tout autre outil tel qu'une machine à riveter, à clincher, à perforer, dans laquelle les outils sont à un moment donné serrés sur une pièce à traiter. Dans le cas d'une pince de soudage, il pourra s'agir par exemple d'une pince dont les bras supportant les électrodes sont du type dit "en C" ou du type dit "en ciseaux", étant dans tous les cas nécessaire, pour la commande des mouvements de cette pince, de soudage ou autre, de transformer, par un système à vis - écrou ou analogue, la rotation de l'arbre du moteur en un mouvement de translation d'un organe d'actionnement de la pince. Ce type de motorisation électrique, plus facile à asservir, tend à remplacer la motorisation par vérins hydrauliques ou pneumatiques. Le principe et les avantages des dispositifs de ce type ont été indiqués en particulier dans le brevet français n° 85 12239 au nom de la demanderesse, décrivant une machine de soudage par résistance à commande numérique.

Le variateur de commande mentionné plus haut a pour fonction d'alimenter le moteur en courant pour le mettre en rotation lors des phases dynamiques de déplacement des bras de support des outils (ouverture ou fermeture de la pince) et, en phase statique, pour lui faire exercer un couple, transformé par ledit système de transformation de mouvement en une force de serrage des outils sur la pièce, par exemple une tôle à souder.

Quant à l'organe d'asservissement précité, du type analogique (resolver) ou digital (encoder), il est accouplé au rotor du moteur et a pour fonction de renseigner le variateur de commande sur la position et la vitesse du rotor du moteur, et d'en assurer ainsi l'asservissement.

Sur le plan de la réalisation de telles machines, il existe plusieurs concepts de motorisation, à savoir à système de transformation de mouvement rotatif en mouvement de translation du type "séparé" du moteur ou du type "traversant" le moteur. Pour simplifier l'expression, on supposera qu'il s'agit de systèmes à vis - écrou, mais il va de soi que les principes de l'invention resteront valables pour tout autre type de système de transformation de mouvement, par exemple à roue dentée et crémaillère, ou autre.

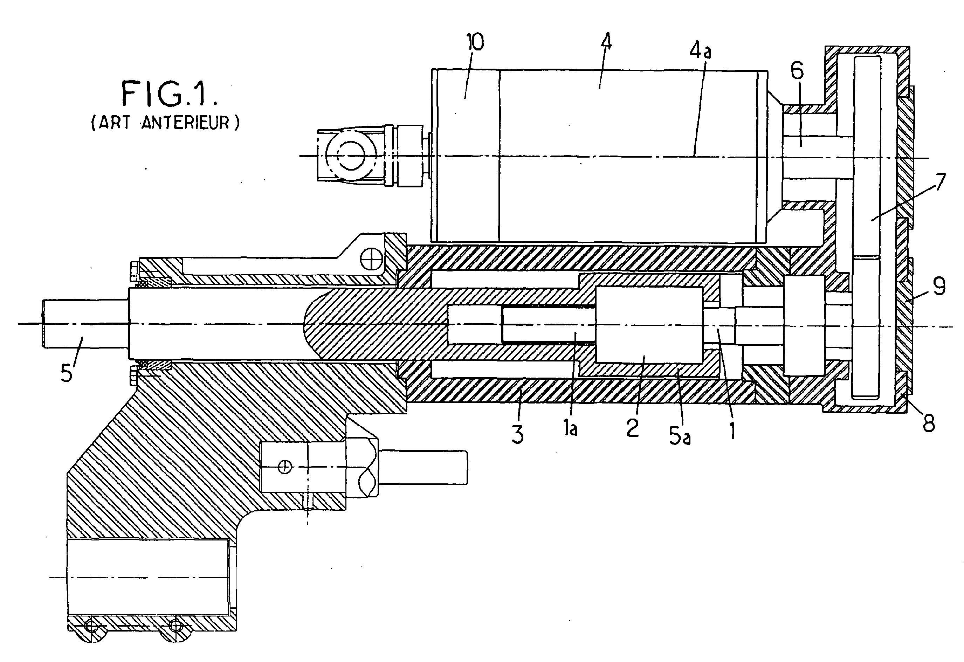

Selon le concept du type "séparé", représenté à titre d'exemple à la figure 1, l'axe la de la vis 1, en prise avec un écrou 2 mobile en translation dans le corps 3 du dispositif, est parallèle à l'axe 4a du moteur électrique 4. L'organe d'actionnement de la pince, non représentée, est référencé en 5 et est en liaison cinématique avec l'écrou 2 par la pièce 5a. En conséquence, l'arbre de sortie 6 du moteur 4 doit être relié à la tête de la vis 1 par un système de transmission de mouvement rotatif quelconque, par exemple à engrenages ou à courroie crantée et poulies, comme cela a été référencé globalement en 7. De cette conception résulte le fait que l'on peut avoir aisément accès à la tête de la vis 1, au niveau du boîtier d'extrémité 8, après en avoir extrait son bouchon de fermeture 9. En effet, on peut alors introduire une clé appropriée dans un trou cannelé de la vis 1, pour la faire tourner manuellement, le moteur 4 étant à l'arrêt. Cela permet de faire tourner la vis 1 à la main, par exemple pour procéder à un réglage sur la pince ou sur les électrodes ou autres outils. On remarque que l'organe d'asservissement 10 du moteur 4, situé en bout de carter du moteur, ne constitue aucune gêne pour ces opérations.

Par contre, ce type de construction présente les inconvénients de nécessiter un grand nombre de pièces, d'être d'un poids et d'un encombrement importants sur une machine à souder, et d'être coûteux.

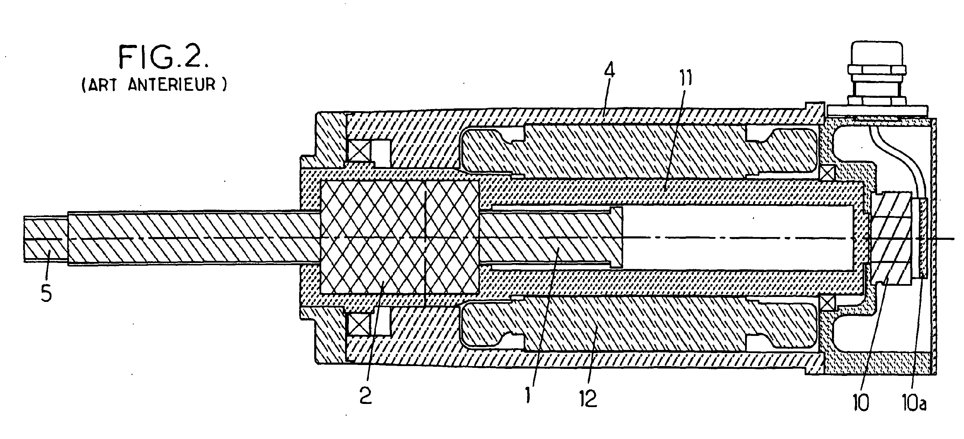

Selon le concept du type "traversant", c'est-à-dire à vis traversante, qui ne présente pas les mêmes inconvénients et qui est représenté à titre d'autre exemple à la figure 2, on intègre directement le système vis - écrou au moteur : l'écrou 2 est ici mobile en rotation et est donc directement solidaire du rotor 11 du moteur 4, dont le stator est référencé 12. La vis 1, en prise avec cet écrou et axialement mobile en translation dans le moteur 4, possède une extrémité sortante 5 constituant l'organe d'actionnement de la pince. On remarque ici, et contrairement au cas précédent, que l'organe d'asservissement 10 du moteur 4, encore situé en bout d'arbre du moteur et qui peut lui-même être masqué par une carte de circuit imprimé 10a, empêche tout accès à l'extrémité du rotor 11, et empêche donc de le faire tourner manuellement lorsque le moteur 4 est à l'arrêt, pour faire tourner l'écrou 2 et provoquer l'avance de la vis 1.

Pour remédier à cet inconvénient on pourrait envisager de ne plus positionner l'organe d'asservissement 10 du moteur en bout d'arbre, mais de le désaxer par rapport à ce dernier et de relier ledit organe d'asservissement au rotor du moteur au moyen d'un ensemble à roue et pignon ou à poulie et courroie crantée. L'extrémité de l'arbre du moteur 4 serait alors à nouveau accessible pour une mise en rotation manuelle, mais ceci encore avec les inconvénients d'une complexité de réalisation (pièces supplémentaires), d'une augmentation de l'encombrement et d'un coût de fabrication plus élevé.

Le but de la présente invention est de remédier à tous ces inconvénients de la technique antérieure, et donc d'obtenir un accès commode à l'arbre du moteur pour le faire tourner et mouvoir ainsi manuellement en translation l'organe d'actionnement de la pince, ceci aux moindres frais et sans augmenter l'encombrement ni le poids de l'équipement.

A cet effet, un dispositif tel que défini au début est, conformément à l'invention, du type à système de transformation de mouvement rotatif en mouvement de translation traversant le moteur et est caractérisé en ce que, ledit organe d'asservissement accouplé au rotor du moteur étant disposé en bout d'arbre moteur, l'arbre est pourvu d'une roue dentée actionnable de l'extérieur, pour sa mise en rotation manuelle, à travers un orifice de carter décalé par rapport audit arbre.

Ladite roue dentée peut être conique, et l'axe dudit orifice former un certain angle avec l'axe du moteur, par exemple un angle de 90°.

Selon une variante, ladite roue dentée est cylindrique et est en prise avec un pignon cylindrique actionnable à travers ledit orifice, l'axe dudit orifice pouvant alors être parallèle à l'axe du moteur.

Avantageusement, ladite roue dentée sera mise en rotation par une clé, cette clé pouvant porter à son extrémité une denture pouvant s'engrener avec ladite roue.

En variante, ledit carter de moteur contient une denture actionnable à travers ledit orifice et propre à être mise en rotation par la clé et en même temps à être amenée en prise avec ladite roue dentée de l'extrémité d'arbre, le désengagement entre ladite denture et la roue dentée s'effectuant, lors du retrait de la clé, sous l'effet d'un ressort ou de l'inertie.

Selon une autre variante, on peut également prévoir que ledit carter de moteur contient une denture actionnable à travers ledit orifice et propre à être mise en rotation par la clé, cette denture étant en prise permanente avec ladite roue dentée.

Bien entendu, toutes les dentures mises en jeu pourront être de tout type approprié, par exemple droites, hélicoïdales, inclinées, ou encore à crémaillère et vis sans fin.

Deux modes de mise en oeuvre de l'invention vont maintenant être décrits à titre d'exemples nullement limitatifs, avec référence aux autres figures du dessin ci-annexé dans lequel :
- la figure 3 montre en coupe axiale partielle un dispositif selon l'invention, du type à roue conique en bout d'arbre moteur ;
- la figure 4 est une vue schématique complète du même dispositif en représentation simplifiée ;
- la figure 5 montre une variante à roue dentée cylindrique, également en représentation simplifiée ;
- la figure 6 est une vue en coupe axiale partielle dans la variante à roue dentée cylindrique, selon laquelle le carter de moteur contient une denture actionnable par une clé et pouvant se désengager de la roue dentée de l'arbre du moteur ; et
- la figure 7 est une vue analogue à la précédente, dans la variante à roue dentée conique, selon laquelle le carter de moteur contient une denture actionnable par une clé et engagée en permanence avec la roue dentée de l'arbre du moteur.

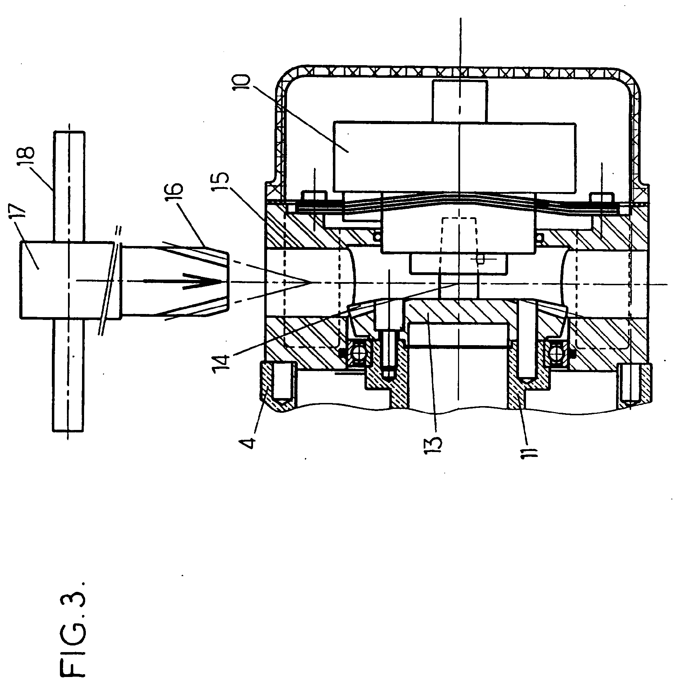

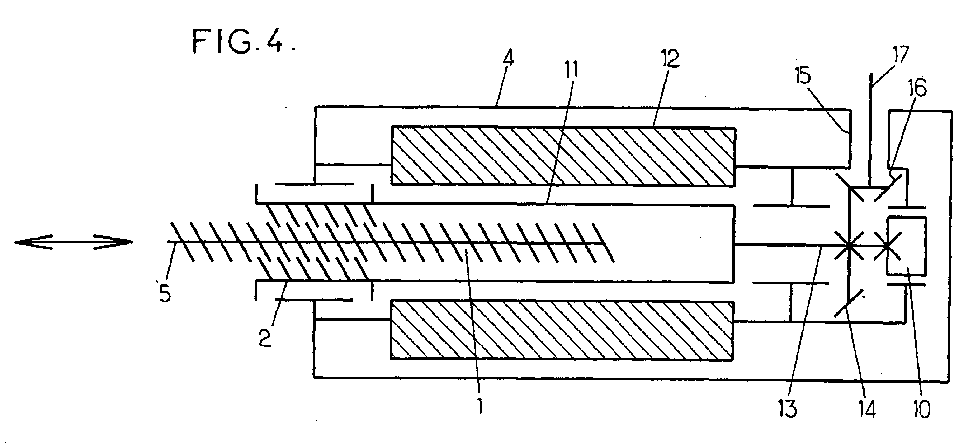

Sur la figure 3 on a repris les mêmes références que sur la figure 2 pour désigner les mêmes organes ou des organes jouant le même rôle dans les deux cas. On voit que l'extrémité 13 d'arbre du moteur 4 porte, du côté de l'organe d'asservissement 10 du moteur, une roue dentée conique 14 actionnable à travers un orifice 15 du carter moteur, dont l'axe est dirigé à 90° de celui de l'arbre du moteur, c'est-à-dire de l'axe du rotor 11. Lorsque le moteur 4 est à l'arrêt, on peut introduire par cet orifice 15 la denture 16 d'une clé 17, la mettre en prise avec la roue dentée 14 et faire tourner manuellement le rotor 11 du moteur et l'écrou 2 qui en est solidaire, en faisant pivoter la clé 17 grâce à sa poignée 18. On pourra alors régler manuellement, par exemple, l'écartement entre les deux électrodes d'une pince de soudage, en provoquant une translation de la vis 1 (voir aussi la figure 4).

Il est à noter que la denture 16 pourrait être logée à demeure dans le fond de l'orifice 15, y être maintenue en position libre par un ressort de rappel ou par son inertie, et être amenée en prise avec la roue dentée 14 seulement lors de l'introduction dans l'orifice 15 d'une clé dépourvue de denture mais profilée pour faire tourner la denture 16 et entraîner ainsi la roue 14 en rotation ; cette denture pourrait aussi être en prise permanente avec la roue dentée 14.

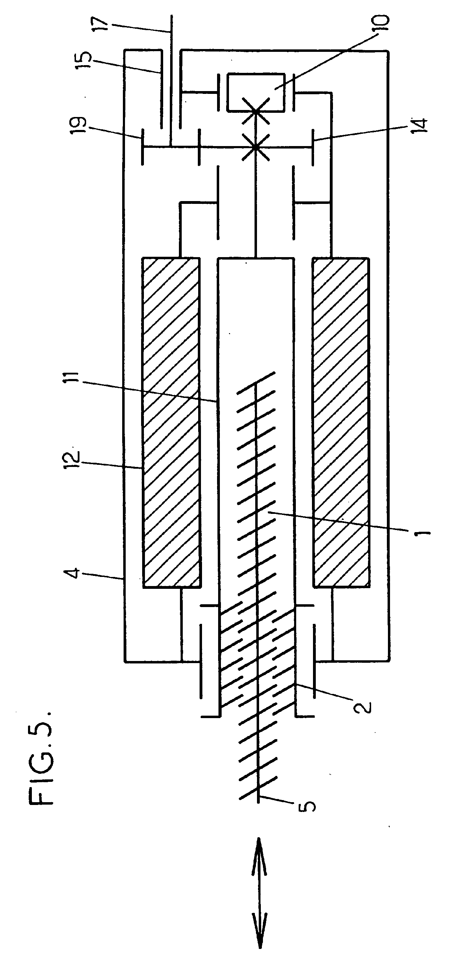

Dans le mode de réalisation de la figure 5 on a représenté un mode de réalisation selon lequel la roue dentée 14 est cylindrique et est en prise avec un pignon cylindrique 19 actionnable à travers un orifice 15 du carter moteur, dont l'axe est parallèle à l'axe du moteur 4. A l'arrêt du moteur on pourra alors faire tourner le pignon 19 avec une clé analogue à la clé 17, et donc entraîner manuellement en rotation la roue dentée 14 ainsi que le rotor 11 et l'écrou 2, provoquant ainsi la translation de la vis 1.

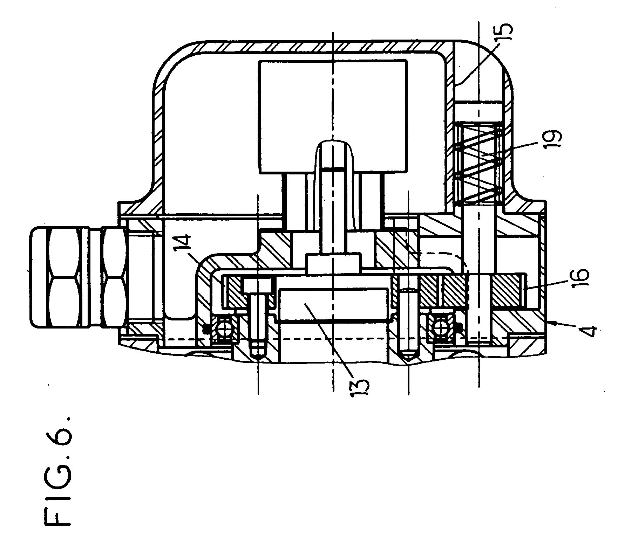

La figure 6 montre la variante selon laquelle le carter de moteur 4 contient une denture cylindrique 16 actionnable à travers l'orifice 15 et propre à être mise en rotation par une clé analogue à la clé 17 mais sans denture, et en même temps à être amenée en prise avec la roue dentée cylindrique 14 de l'extrémité d'arbre. Le désengagement entre la denture 16 et la roue dentée 14 s'effectue, lors du retrait de la clé, sous l'effet d'un ressort 19.

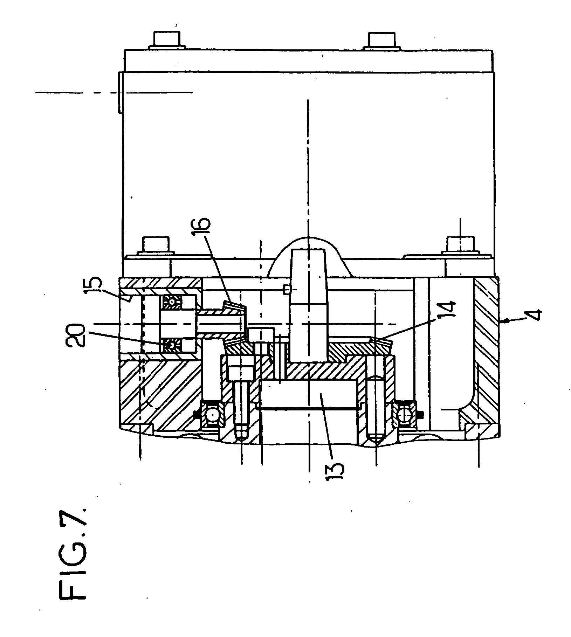

La figure 7 décrit la variante selon laquelle carter de moteur 4 contient une denture 16 conique, également propre à être mise en rotation par une clé, cette denture étant en prise permanente avec la roue dentée conique 14 de l'arbre du moteur et étant montée pour cette raison dans un roulement 20 de l'orifice 15.

Quel que soit le mode de réalisation, il va de soi que le fonctionnement serait globalement le même si la vis était solidaire en rotation du rotor 11, et l'écrou mobile en translation.

Ceci étant, les principaux avantages de l'invention sont les suivants :
- possibilité d'assurer une commande manuelle sur des moteurs à vis intégrée et organe d'asservissement en bout d'arbre, quel que soit le type d'encoder ou de resolver utilisé ;
- possibilité de travailler avec un nombre accru d'organes d'asservissement, et donc avec une plus large gamme d'appareils ;
- la commande manuelle est robuste et autorise un couple d'entraînement important ;
- on peut avoir facilement plusieurs accès sur le carter pour la mise en rotation de l'arbre du moteur ;
- l'intégration de cette commande manuelle n'augmente que modérément l'encombrement de l'équipement ;
- son coût reste modéré par rapport aux solutions antérieures ;
- on peut mettre manuellement la pince en butée, en position de fermeture ou d'ouverture, pour donner un zéro à un appareil de mesure d'ouverture ;
- on peut aussi débloquer le moteur quand il perd ses références et qu'il vient en butée et se bloque, que l'origine du blocage soit mécanique
ou électrique, ou encore vienne d'un blocage au niveau du logiciel ; dans le cas particulier d'électrodes de soudage, on pourra aussi intervenir manuellement en cas de collage des électrodes sur les pièces pour les décoller, ce qui ne serait pas possible avec le moteur.

## Revendications

1. Dispositif de motorisation électrique pour pince d'outillage, du type comportant un carter de moteur électrique (4) dont l'arbre est connecté à la pince, pour la commande de l'ouverture d'outils portés par des bras articulés, de leur fermeture et de leur serrage sur une pièce, par un système de transformation, du type traversant le moteur, d'un mouvement rotatif de l'arbre en un mouvement de translation d'un organe d'actionnement (5) de la pince, ce moteur étant associé à un organe d'asservissement (10) accouplé au rotor du moteur, **caractérisé en ce que**, l'organe d'asservissement (10) étant disposé en bout d'arbre moteur, l'arbre est pourvu d'une roue dentée (14) actionnable de l'extérieur, pour sa mise en rotation manuelle, à travers au moins un orifice (15) de carter, décalé par rapport audit arbre.

2. Dispositif selon la revendication 1, **caractérisé en ce que** ladite roue dentée (14) est conique et **en ce que** l'axe dudit orifice (15) forme un certain angle avec l'axe du moteur (4).

3. Dispositif selon la revendication 2, **caractérisé en ce que** ledit angle est de 90°.

4. Dispositif selon la revendication 1, **caractérisé en ce que** ladite roue dentée (14) est cylindrique et est en prise avec un pignon cylindrique (19) actionnable à travers ledit orifice (15).

5. Dispositif selon la revendication 4, **caractérisé en ce que** l'axe dudit orifice (15) est parallèle à l'axe du moteur (4).

6. Dispositif selon l'une quelconque des revendications précédentes, **caractérisé en ce que** ladite roue dentée (14) peut être mise en rotation par une clé (17) .

7. Dispositif selon la revendication 6, **caractérisé en ce que** ladite clé (17) porte à son extrémité une denture (16) pouvant s'engrener avec ladite roue (14).

8. Dispositif selon la revendication 6, **caractérisé en ce que** ledit carter de moteur (4) contient une denture (16) actionnable à travers ledit orifice (15) et propre à être mise en rotation par la clé (17) et en même temps à être amenée en prise avec ladite roue dentée (14) de l'extrémité d'arbre, le désengagement entre ladite denture (16) et la roue dentée (14) s'effectuant, lors du retrait de la clé (17), sous l'effet d'un ressort (19) ou de l'inertie.

9. Dispositif selon la revendication 6, **caractérisé en ce que** ledit carter de moteur (4) contient une denture (16) actionnable à travers ledit orifice (15) et propre à être mise en rotation par la clé (17), cette denture étant en prise permanente avec ladite roue dentée (14).

10. Dispositif selon l'une quelconque des revendications précédentes, **caractérisé en ce que** la pince est une pince de soudage par points, les outils étant constitués par des électrodes de soudage.

## Claims

1. An electric motor device for powering a tool clamp, of the type comprising a casing of an electric motor (4) the shaft of which is connected to the clamp, to control opening tools carried by articulated arms, closing them and clamping them onto a part, by a system of the through-the-motor type which converts the rotary motion of the shaft into translational motion of a mechanism (5) operating the clamp, this motor being linked to a slaving device (10) coupled to the rotor of the motor, **characterised in that** the slaving device (10) being arranged at the end of the motor shaft, the shaft is fitted with a gear wheel (14) which can be operated from the outside, for rotating it manually, through at least one opening (15) in the casing, offset with respect to said shaft.

2. A device according to claim 1, **characterised in that** the gear wheel (14) is a bevel gear, and that the axis of said opening (15) forms a certain angle with the axis of the motor (4).

3. A device according to claim 2, **characterised in that** said angle is 90°.

4. A device according to claim 1, **characterised in that** said gear wheel (14) is cylindrical and meshes with a cylindrical pinion (19) which can be operated through said opening (15).

5. A device according to claim 4, **characterised in that** the axis of said opening (15) is parallel to the axis of the motor (4).

6. A device according to any one of the previous claims, **characterised in that** said gear wheel (14) can be rotated by a key (17).

7. A device according to claim 6, **characterised in that** said key (17) has a set of teeth (16) at its end which can engage with said gear wheel (14).

8. A device according to claim 6, **characterised in that** said motor casing (4) contains a set of teeth (16) which can be operated through said opening (15) and can be rotated by the key (17) and at the same time be made to engage with said gear wheel (14) on the end of the shaft, said set of teeth (16) and gear wheel (14) being disengaged from each other when the key (17) is withdrawn by the action of a spring (19) or of inertia.

9. A device according to claim 6, **characterised in that** said motor casing (4) contains a set of teeth (16) which can be operated through said opening (15) and can be rotated by the key (17), this set of teeth being permanently engaged with said gear wheel (14).

10. A device according to any one of the previous claims **characterised in that** the clamp is a spot welding clamp, the tools being constituted by welding electrodes.

## Patentansprüche

1. Elektrische Antriebsvorrichtung für Greifer mit einem Elektromotorgehäuse (4), dessen Welle mit dem Greifer verbunden ist, zur Steuerung des Öffnens von Werkzeugen, die an Gelenkarmen sitzen, sowie zur Steuerung des Schließens und des Festklemmens dieser Werkzeuge an einem Werkstück durch ein durch den Motor hindurch verlaufendes System zur Umwandlung einer Drehbewegung der Welle in eine Vorschubbewegung eines Betätigungsorgans (5) für den Greifer, wobei dieser Motor mit einem Regelungsorgan (10) verbunden ist, das an den Rotor des Motors gekuppelt ist,
**dadurch gekennzeichnet,**
**dass** das Regelungsorgan (10) am Ende der Motorwelle angeordnet ist und die Welle mit einem Zahnrad (14) versehen ist, das durch mindestens eine Öffnung (15) im Gehäuse, die zu dieser Welle verschoben ist, von außen bewegbar ist, um manuell gedreht zu werden.

2. Vorrichtung nach Anspruch 1,
**dadurch gekennzeichnet,**
**dass** dieses Zahnrad (14) konisch geformt ist und dass die Achse dieser Öffnung (15) mit der Achse des Motors (4) einen bestimmten Winkel bildet.

3. Vorrichtung nach Anspruch 2,
**dadurch gekennzeichnet,**
**dass** dieser Winkel 90° beträgt.

4. Vorrichtung nach Anspruch 1,
**dadurch gekennzeichnet,**
**dass** dieses Zahnrad (14) zylindrisch geformt ist und sich in Eingriff mit einem zylindrischen Ritzel (19) befindet, das durch diese Öffnung (15) hindurch betätigt werden kann.

5. Vorrichtung nach Anspruch 4,
**dadurch gekennzeichnet,**
**dass** die Achse dieser Öffnung (15) parallel zur Achse des Motors (4) verläuft.

6. Vorrichtung nach einem der vorherigen Ansprüche,
**dadurch gekennzeichnet,**
**dass** dieses Zahnrad (14) mit einem Schlüssel (17) in eine Drehbewegung versetzt werden kann.

7. Vorrichtung nach Anspruch 6,
**dadurch gekennzeichnet,**
**dass** dieser Schlüssel (17) an seinem Ende eine Zahnung (16) aufweist, die mit dem Zahnrad (14) in Eingriff kommen kann.

8. Vorrichtung nach Anspruch 6,
**dadurch gekennzeichnet,**
**dass** das Motorgehäuse (4) eine Zahnung (16) aufweist, die durch die Öffnung (15) hindurch betätigt werden kann und dazu geeignet ist, mit dem Schlüssel (17) in eine Drehbewegung versetzt zu werden und zugleich mit dem Zahnrad (14) des Wellenendes in Eingriff gebracht zu werden, wobei das Lösen dieser Zahnung (16) von dem Zahnrad (14) beim Zurückziehen des Schlüssels (17) unter Einwirkung einer Feder (19) oder durch Trägheitswirkung erfolgt.

9. Vorrichtung nach Anspruch 6,
**dadurch gekennzeichnet,**
**dass** das Motorgehäuse (4) eine Zahnung (16) aufweist, die durch die Öffnung (15) hindurch betätigt werden kann und dazu geeignet ist, mit dem Schlüssel (17) in eine Drehbewegung versetzt zu werden, wobei diese Zahnung sich mit dem Zahnrad (14) in permanentem Eingriff befindet.

10. Vorrichtung nach einem der vorherigen Ansprüche,
**dadurch gekennzeichnet,**
**dass** der Greifer ein Greifer zum Punktschweißen ist, wobei die Werkzeuge von Schweißelektroden gebildet werden.
